# EUROPEAN PATENT APPLICATION

(11) **EP 3 228 601 A1**
(43) Date of publication of application: **11.10.2017**
(21) Application number: 15864777.6
(22) Date of filing: 01.12.2015
(51) Int. Cl.: C03C 3/091, C03C 3/093, F24C 15/10, H05B 6/12

(54) **GLASS PLATE AND HEATER USING SAME**

(30) Priority: 02.12.2014 JP 2014243758
(71) Applicant: Asahi Glass Company, Limited, Tokyo 100-8405 (JP)
(72) Inventor: MIYASAKA, Junko, Tokyo 100-8405 (JP); MURAYAMA, Suguru, Tokyo 100-8405 (JP); OHARA, Seiki, Tokyo 100-8405 (JP); NISHIZAWA, Manabu, Tokyo 100-8405 (JP)
(74) Representative: Müller-Boré & Partner Patentanwälte PartG mbB
(86) International application number: PCT/JP2015/083810
(87) International publication number: WO 2016/088778

(57) **Abstract**

To provide a glass plate which is hardly broken and which has a high infrared transmittance.

A glass plate, which has a thickness of from 1 to 8 mm, has an infrared transmittance T₃₀₀₀ at a wavelength of 3,000 nm of at least 4%, an average thermal expansion coefficient α at from 50 to 350°C of from 15 to 35×10⁻⁷/°C, and a glass composition comprising, as represented by mol% based on oxides, from 50 to 85% of SiO₂, from 0.1 to 25% of Al₂O₃, from 0.1 to 20% of B₂O₃, from 0 to 20% in total of at least one member selected from MgO, CaO, SrO, BaO and ZnO, and from 0 to 20% in total of at least one member selected from Li₂O, Na₂O and K₂O.

## Description

### TECHNICAL FIELD

The present invention relates to a glass plate suitable for a top surface of a heater, and a heater using it.

### BACKGROUND ART

For a heater such as a cooking heater, a top surface on which an object to be heated such as a pot is to be placed is required to have heat resistance, and thus a crystallized glass plate having an extremely low thermal expansion coefficient has been used for the top surface (for example, Patent Document 1).

However, a crystallized glass plate, which comprises two phases of a crystalline phase and a glass phase, is likely to have cracks at the interface between the two phases when it experiences a mechanical shock. On the other hand, a glass plate which is not crystallized is inferior in the heat resistance and is likely to be broken.

### PRIOR ART DOCUMENTS

### PATENT DOCUMENTS

Patent Document 1: JP-A-11-100229

### DISCLOSURE OF INVENTION

### TECHNICAL PROBLEM

In recent years, IH cooking heaters are commonly used, and cooking devices are less likely to be excessively heated. On the other hand, as a temperature sensor for a heater, an infrared sensor with a high response speed is used in many cases, and a top surface having a high infrared transmittance has been desired.

The object of the present invention is to provide a glass plate suitable for a top surface of a heater, which has a high infrared transmittance and which is less likely to be broken both by a thermal shock and by a mechanical shock. Such a glass plate suitable for a top surface of a heater may be used as a heat resistant glass plate.

### SOLUTION TO PROBLEM

The present invention provides a glass plate, preferably a glass plate for a heater, which has a thickness of from 1 to 8 mm, an infrared transmittance T₃₀₀₀ at a wavelength of 3,000 nm of at least 4%, preferably at least 10%, an average thermal expansion coefficient α at from 50 to 350°C of from 15×10⁻⁷ to 35×10⁻⁷/°C, and a composition comprising, as represented by mol% based on oxides:

| | |
|---|---|
| SiO₂: | 50 to 85%, |
| Al₂O₃: | 0.1 to 25%, |
| B₂O₃: | 0.1 to 20%, |
| MgO+CaO+SrO+BaO+ZnO: | 0 to 20%, and |
| Li₂O+Na₂O+K₂O: | 0 to 20%. |

Of the glass plate, preferably the glass plate for a heater, of the present invention, the crack occurrence load is preferably higher than 1.96N.

Further, the strain point of the glass plate is preferably from 520 to 780°C.

It is preferred that the glass plate has a composition comprising, as represented by mol% based on oxides:

| | |
|---|---|
| SiO₂: | 60 to 70%, |
| Al₂O₃: | 4 to 25%, |
| B₂O₃: | 8 to 20%, |
| MgO: | 0 to 10%, |
| CaO: | 0 to 5%, |
| SrO: | 0 to 5%, |
| BaO: | 0 to 5%, |
| ZnO: | 0 to 5%, |
| MgO+CaO+SrO+BaO+ZnO: | 3 to 10%, |
| Li₂O: | 0 to 1%, |
| Na₂O: | 0 to 2%, |
| K₂O: | 0 to 2%, and |
| Li₂O+Na₂O+K₂O: | 0 to 10%, |

and has an average thermal expansion coefficient α at from 50 to 350°C of from 15×10⁻⁷ to 30×10⁻⁷/°C.

It is preferred that the glass plate has a composition comprising, as represented by mol% based on oxides:

| | |
|---|---|
| Al₂O₃: | 5 to 25%, |
| MgO: | 1 to 8%, |
| ZnO: | 0 to 2%, |
| SiO₂+Al₂O₃+B₂O₃: | 80%, |
| MgO+CaO+SrO+BaO+ZnO: | 3 to 8%, |
| Li₂O+Na₂O+K₂O: | 0 to 2% |

Further, it is preferred that the glass plate comprises from 11 to 22% of B₂O₃+MgO+CaO+SrO+BaO+ZnO.

It is preferred that of the glass plate, MgO/(MgO+CaO+SrO+BaO+ZnO) is from 0.6 to 1.

Further, it is preferred that the glass plate has a compressive stress on at least a part of its surface.

The present invention provides a heater comprising an infrared sensor, a top surface on which an object to be heated is to be placed, being composed of a glass plate, that is, a heater comprising a top surface on which an object to be heated is to be placed, and an infrared sensor, the top surface being composed of a glass plate, wherein the glass plate has a thickness of from 1 to 8 mm, an infrared transmittance T₃₀₀₀ at a wavelength of 3,000 nm of at least 4 %, preferably at least 10%, an average thermal expansion coefficient α at from 50 to 350°C of from 15×10⁻⁷ to 35×10⁻⁷/°C, and a composition comprising, as represented by mol% based on oxides:

| | |
|---|---|
| SiO₂: | 50 to 85%, |
| Al₂O₃: | 0.1 to 25%, |
| B₂O₃: | 0.1 to 20%, |
| MgO+CaO+SrO+BaO+ZnO: | 0 to 20%, and |
| Li₂O+Na₂O+K₂O: | 0 to 20%. |

Further, it is preferred that the glass plate is chemically tempered.

### ADVANTAGEOUS EFFECTS OF INVENTION

According to the present invention, it is possible to obtain a glass plate, preferably a glass plate for a heater, which is less likely to be broken both by a thermal shock and by a mechanical shock, and which has a high infrared transmittance, and by using the glass plate, it is possible to obtain a heater excellent in convenience.

### DESCRIPTION OF EMBODIMENTS

In this specification, glass means amorphous glass with no diffraction peak showing crystals confirmed by X-ray diffraction method and does not include crystallized glass.

In this specification, the composition of glass is represented by mol% based on oxides, and contents of components the valence of which is readily variable in glass are represented as calculated as typical oxides. In this specification, unless otherwise specified, "%" means mol% based on an oxide. Further, regarding the glass composition, "containing substantially no" means that the component is not contained excluding inevitable impurities.

In this specification, the crack occurrence load means a load under which the crack occurrence probability is 50% when a Vickers indenter is pressed against the glass surface at a temperature of the atmosphere of 22°C at a water vapor dew point of from 0°C to -2°C. Measurement of the crack occurrence load is conducted in such a manner that with respect to various loads, a Vickers indenter is pressed against different positions on the glass surface under a certain load to make 10 Vickers indentations, whereupon the number of cracks is measured. Since the maximum number of cracks which occur from one Vickers indentation is 4, the load under which the number of cracks which occur when 10 Vickers indentations are made is taken as the crack occurrence load.

In this specification, the strain point of a glass plate is a strain point measured by fiber elongation method as defined in JIS-R3103 (2001) and ASTM-C336 (1971).

In this specification, the glass transition point of a glass plate is a value measured by using a TMA (thermal mechanical analyzer), and is a glass transition point measured by the method as defined in JIS-R3103 (2001).

The glass plate, preferably the glass plate for a heater of the present invention (hereinafter referred to as the glass plate of the present invention, and glass for the glass plate will be referred to as glass of the present invention) has a thickness of at least 1 mm, preferably at least 1.5 mm, more preferably at least 2 mm, further preferably at least 2.5 mm, in order that the glass plate has high strength and is less likely to be deformed.

The thickness of the glass plate of the present invention is at most 8 mm for weight waving, preferably at most 7 mm, more preferably at most 5 mm, further preferably at most 4 mm, particularly preferably at most 3.5 mm.

The infrared transmittance T₃₀₀₀ of the glass plate of the present invention at a wavelength of 3,000 nm is at least 4% in order to make the temperature control by an infrared sensor easy, and is preferably at least 5%, more preferably at least 10%, further preferably at least 15%, still more preferably at least 20%, most preferably at least 30%.

The infrared transmittance T₂₅₀₀ of the glass plate of the present invention at a wavelength of 2,500 nm is preferably at least 40% in order to make the temperature control by an infrared sensor easy, more preferably at least 60%, further preferably at least 78%, most preferably at least 80%.

The infrared transmittance T₃₂₀₀ of the glass plate of the present invention at a wavelength of 3,200 nm is preferably at least 10% in order to make the temperature control by an infrared sensor easy, more preferably at least 20%, further preferably at least 25%, most preferably at least 30%.

The glass plate of the present invention has an average thermal expansion coefficient α at from 50 to 350°C of from 15×10⁻⁷ to 35×10⁻⁷/°C, and is thereby hardly broken by a thermal shock.

The average thermal expansion coefficient α at from 50 to 350°C is preferably at most 30×10⁻⁷/°C so as to suppress breakage by a thermal shock, more preferably at most 28×10⁻⁷/°C, further preferably at most 25×10⁻⁷/°C.

Glass having a low thermal expansion coefficient tends to have a high melting temperature at the time of production. In order that the melting temperature at the time of glass production can be lowered, the average thermal expansion coefficient α at from 50 to 350°C is preferably at least 18×10⁻⁷/°C, more preferably at least 20×10⁻⁷/°C, further preferably at least 25×10⁻⁷/°C.

The glass plate of the present invention has a strain point of preferably from 520 to 780°C. By the glass plate of the present invention having a strain point of at least 520°C, breakage by a thermal shock can be suppressed. It is preferably at least 560°C, more preferably at least 600°C, further preferably at least 650°C.

The glass plate of the present invention has a glass transition point of preferably from 580 to 800°C. By the glass plate of the present invention having a glass transition point of at least 580°C, breakage by a thermal shock can be suppressed. It is preferably at least 600°C, more preferably at least 650°C, further preferably at least 700°C.

Of the glass plate of the present invention, the heat resistant temperature t₃ as measured by the following method is preferably from 100 to 780°C.

That is, a 5 cm square glass plate having a thickness of 1.2 to 5 mm is prepared and heated in an electric furnace kept at high temperature for 30 minutes or longer. Then, the glass plate is taken out from the electric furnace and moved into a liquid kept at low temperature within 5 minutes, whereupon whether the glass plate has a breakage or not is observed. The liquid is not limited and may, for example, be water or an oil. This test is conducted several times at different temperatures, and the maximum temperature difference t₁ when the occurrence probability of breakage or a crack of 1 cm or longer is less than 50%, and the minimum temperature difference t₂ when the occurrence probability of breakage or a crack of 1 cm or longer is 50% or higher, are determined. The average t₃ of t₁ and t₂ is taken as the heat resistant temperature. The difference between t₁ and t₂ is preferably within 50°C, more preferably within 20°C.

The heat resistant temperature t₃ is preferably at least 140°C, more preferably at least 180°C, further preferably at least 220°C, particularly preferably at least 260°C, most preferably at least 300°C.

Of glass having a very high heat resistant temperature t₃, the melting temperature for producing glass tends to be too high. In order to make the melting temperature at the time of glass production low, the heat resistant temperature t₃ is preferably at most 750°C, more preferably at most 700°C, further preferably at most 650°C, particularly preferably at most 600°C.

Of the glass plate of the present invention, the crack occurrence load is preferably higher than 1.96N in order that the glass plate is hardly broken by a mechanical shock. The crack occurrence load of the glass plate of the present invention is more preferably higher than 4.9N, further preferably at least 9.8N, particularly preferably at least 19.6N.

The glass plate of the present invention, which has a compressive stress on at least a part of its surface, is less likely to be broken by a thermal shock, and is less likely to be broken by a mechanical shock. A glass plate having a compressive stress on its surface may be obtained, for example, by a tempering treatment. The tempering treatment is preferably chemical tempering.

The glass plate of the present invention has a maximum surface roughness in the plate thickness direction of preferably at most 20 µm in view of unbreakability, more preferably at most 2 µm, further preferably at most 200 nm, particularly preferably at most 20 nm.

The β-OH value of the glass of the present invention may be properly selected depending upon the properties required. In order to make the strain point of glass high, the β-OH value is preferably low. The β-OH value is preferably at most 0.3 mm⁻¹, more preferably at most 0.25 mm⁻¹, further preferably at most 0.2 mm⁻¹.

The β-OH value may be adjusted by various conditions at the time of melting the raw material, for example, the water content in the glass raw material, the water vapor concentration in a melting furnace, and the retention time of the molten glass in the melting furnace. As a method of adjusting the water content in the glass raw material, a method of using a hydroxide instead of an oxide as the glass raw material (for example, a method of using magnesium hydroxide (Mg(OH)₂) instead of magnesium oxide (MgO) as a magnesium source) may be mentioned. As a method of adjusting the water vapor concentration in a melting furnace, a method of burning fossil fuel as mixed with an oxygen gas at the time of burning by a burner, or a method of burning an oxygen gas and the air as mixed may be mentioned.

The glass plate of the present invention has a density of preferably at most 2.45 g/cm³ for weight saving, more preferably at most 2.40 g/cm³, further preferably at most 2.35 g/cm³. In order to lower the viscosity at the time of glass production, it is preferably at least 2.20 g/cm³, more preferably at least 2.23 g/cm³, further preferably at least 2.25 g/cm³.

The glass plate of the present invention has a Young's modulus of preferably at least 58 GPa in order to reduce recesses when hit by a hard object, more preferably at least 60 GPa, further preferably at least 62 GPa. In order to decrease devitrification at the time of glass production, it is preferably at most 80 GPa, more preferably at most 75 GPa, further preferably at most 70 GPa.

The glass of the present invention has a specific infrared transmittance, etc., at a specific thickness as described above, and has the following glass composition.

The glass composition of the glass plate of the present invention as represented by mol% based on oxides comprises from 50 to 85% of SiO₂, from 0.1 to 25% of Al₂O₃, from 0.1 to 20% of B₂O₃, from 0 to 20% in total of at least one member selected from MgO, CaO, SrO, BaO and ZnO, and from 0 to 20% in total of at least one member selected from Li₂O, Na₂O and K₂O.

SiO₂, Al₂O₃ and B₂O₃ are essential components. Their total content (SiO₂+Al₂O₃+B₂O₃) is preferably at least 80% since they are useful to increase the infrared transmittance at a wavelength of from 2,500 to 3,500 nm, to increase the heat resistance of glass, to increase the weather resistance and to make the glass be less likely to be scared by a mechanical shock, and the total content is more preferably at least 85%, further preferably at least 90%. The total content (SiO₂+Al₂O₃+B₂O₃) is preferably at most 97% so as to lower the viscosity at the time of glass production and to suppress devitrification, and is more preferably at most 95%.

SiO₂ is the main component of glass. The SiO₂ content is at least 50% to increase the heat resistance of glass, to increase the weather resistance, to make glass be less likely to be scared by a mechanical shock, etc., and is preferably at least 55%, more preferably at least 60%, further preferably at least 65%. In order to lower the viscosity at the time of glass production, the SiO₂ content is at most 85%, preferably at most 80%, more preferably at most 75%, further preferably at most 70%.

Al₂O₃ increase the heat resistance of glass, increases the weather resistance, etc., and its content is at least 0.1%, preferably at least 1%, more preferably at least 2%, further preferably at least 4%, still more preferably at least 5%, particularly preferably at least 8%. In order to lower the viscosity at the time of glass production and to suppress devitrification, the Al₂O₃ content is at most 25%, preferably at most 22%, more preferably at most 20%, further preferably at most 16%.

B₂O₃ is a component to accelerate melting of the glass raw material and to improve mechanical properties and the weather resistance, and is contained in an amount of at least 0.1%. The B₂O₃ content is preferably at least 1%, more preferably at least 2%, further preferably at least 4%, particularly preferably at least 8%. In a case where occurrence of cracks is to be suppressed, it is preferably at least 9%, more preferably at least 10%, most preferably at least 11%. On the other hand, in order to avoid drawbacks such as formation of ream by volatilization and corrosion of the furnace wall, it is at most 20%, preferably at most 17%, more preferably at most 15%, further preferably at most 12%.

MgO, CaO, SrO, BaO and ZnO are components useful to accelerate melting of the glass raw material and to adjust the thermal expansion coefficient, the viscosity and the like, and at least one of them may be contained. Their total content (MgO+CaO+SrO+BaO+ZnO) is preferably at least 1%, more preferably at least 2%, further preferably at least 3%. The total content (MgO+CaO+SrO+BaO+ZnO) is at most 20% so as to increase the infrared transmittance at a wavelength of from 2,500 to 3,500 nm, to keep the thermal expansion coefficient low and to suppress devitrification, and is more preferably at most 18%, further preferably at most 15%, particularly preferably at most 12%, most preferably at most 10%, still most preferably at most 8%.

MgO may be contained since it has a function to lower the viscosity at the time of melting glass and to accelerate melting, reduces the specific gravity and makes the glass be hardly scared. Its content is preferably at least 1%, more preferably at least 2%, further preferably at least 3%. In a case where the thermal expansion coefficient of glass is to be made low and devitrification is to be suppressed, the content is preferably at most 10%, more preferably at most 8%, further preferably at most 5%, most preferably at most 3%, still most preferably at most 2%.

CaO may be contained since it accelerates melting of the glass material and adjusts the viscosity and the thermal expansion coefficient. The CaO content is preferably at most 10% so as to suppress devitrification, more preferably at most 8%, further preferably at most 5%, most preferably at most 2%, still most preferably at most 1%.

SrO may be contained so as to lower the viscosity at the time of melting glass, etc. The SrO content is preferably at most 10% so as to suppress devitrification, more preferably at most 8%, further preferably at most 5%, most preferably at most 2%, still most preferably at most 1%.

BaO may be contained so as to lower the viscosity at the time of melting glass. The BaO content is preferably at most 10% so as to suppress devitrification, more preferably at most 8%, further preferably at most 5%, most preferably at most 2%, still most preferably at most 1%.

ZnO may be contained so as to lower the viscosity at the time of melting glass. The ZnO content is preferably at most 10% so as to suppress devitrification, more preferably at most 8%, further preferably at most 5%, particularly preferably at most 2%. In a case where a float process is employed for formation of the glass plate, substantially no ZnO is preferably contained, since it is easily reduced in a float bath. In the present invention, "containing substantially no ZnO" means a ZnO content of at most 0.15%.

The total content of B₂O₃, MgO, CaO, SrO, BaO and ZnO (B₂O₃+MgO+CaO+SrO+BaO+ZnO) is preferably at least 3% since they are useful to accelerate melting of the glass raw material and to adjust the thermal expansion coefficient, the viscosity and the like. It is more preferably at least 8%, further preferably at least 11%, still more preferably at least 13%, most preferably at least 17%. The total content (MgO+CaO+SrO+BaO+ZnO) is preferably 25% so as to increase the infrared transmittance at a wavelength of from 2,500 to 3,500 nm, to keep the thermal expansion coefficient low and to suppress devitrification, more preferably at most 23%, further preferably at most 22%, still more preferably at most 21%, most preferably at most 20%.

The ratio of the MgO content to the total content of MgO, CaO, SrO, BaO and ZnO (MgO/(MgO+CaO+SrO+BaO+ZnO)) is preferably at least 0.4 so as to make glass be hardly scared, more preferably at least 0.5, further preferably at least 0.6, still more preferably at least 0.7, most preferably at least 0.8. The ratio (MgO/(MgO+CaO+SrO+BaO+ZnO)) is preferably at most 1 so as to suppress devitrification, preferably at most 0.95, more preferably at most 0.9.

ZrO₂ may be contained so as to improve the hardness of the glass plate, to increase the strain point, etc. The ZrO₂ content is preferably at most 5% so as to suppress devitrification, more preferably at most 2%.

Li₂O, Na₂O and K₂O are components to accelerate melting of the glass raw material, to adjust the thermal expansion coefficient, the viscosity and the like, and useful when chemical tempering treatment by ion exchange is conducted, and may be contained. Their total content (Li₂O+Na₂O+K₂O) is preferably at least 0.1 %, more preferably at least 1 %. In order to increase the infrared transmittance at a wavelength of from 2,500 to 3,500 nm and to make the thermal expansion coefficient low, (Li₂O+Na₂O+K₂O) is at most 20%, preferably at most 15%, more preferably at most 12%, further preferably at most 10%, particularly preferably at most 8%, most preferably at most 5%, still most preferably at most 2%.

Li₂O is a component to accelerate melting of the glass raw material, to adjust the thermal expansion coefficient, the viscosity and the like, and useful when chemical tempering treatment by ion exchange is conducted, and is preferably contained. The Li₂O content is preferably at most 10% so as to make the strain point to be high temperature and to keep the batch cost low, more preferably at most 5%, further preferably at most 2%, most preferably at most 1%.

Na₂O is a component to accelerate melting of the glass raw material, to adjust the thermal expansion coefficient, the viscosity and the like, and useful when chemical tempering treatment by ion exchange is conducted, and may be contained. The Na₂O content is preferably at most 10% so as to make the strain point to be high temperature and to make the thermal expansion coefficient low, more preferably at most 5%, further preferably at most 2%, most preferably at most 1%.

K₂O is a component to accelerate melting of the glass raw material, to adjust the thermal expansion coefficient, the viscosity and the like, and useful when chemical tempering treatment by ion exchange is conducted, and may be contained. The K₂O content is preferably at most 10% so as to make the strain point to be high temperature and to make the thermal expansion coefficient low, more preferably at most 5%, further preferably at most 2%, most preferably at most 1%.

The glass plate of the present invention has a heat resistant temperature t₃ of from 100 to 780°C by being formed into a glass plate while the composition ranges of the respective components are within the above ranges.

The glass plate of the present invention may contain SO₃ used as a refining agent. In such a case, the SO₃ content is preferably higher than 0% and at most 0.5%, more preferably at most 0.3%, further preferably at most 0.2%, particularly preferably at most 0.1%.

The glass plate of the present invention may contain Sb₂O₃ or As₂O₃ used as an oxidizing agent and a refining agent. In such a case, the Sb₂O₃ or As₂O₃ content is preferably from 0 to 0.5%, more preferably at most 0.2%, further preferably at most 0.1 %, and it is particularly preferred that substantially no Sb₂O₃ nor As₂O₃ is contained. In the present invention, "containing substantially no Sb₂O₃ nor As₂O₃" means that its content is less than 0.1 %.

The glass plate of the present invention may contain SnO₂ used as an oxidizing gent and a refining agent. In such a case, the SnO₂ content is preferably from 0 to 0.5%, more preferably at most 0.4%, further preferably at most 0.3%.

The glass plate of the present invention may contain PbO in an amount of at most 1% so as to make melting of glass easy. However, considering the environmental burden, it preferably contains substantially no PbO. In the present invention, "containing substantially no PbO" means that its content is at most 0.15%.

The glass plate of the present invention preferably contains substantially no TiO₂, CoO, V₂O₅, MnO and the like as coloring components. When substantially no TiO₂, CoO, V₂O₅, MnO and the like are contained, a decrease in the visible light transmittance can be suppressed. The content of such coloring components is preferably from 0 to 0.05%, more preferably at most 0.02%, further preferably at most 0.01 %, most preferably less than 50 ppm.

The glass plate of the present invention may be used as a top surface of a gas combustion system heater. In such a case, since it is used with a gas combustion apparatus fitted thereto, a glass plate having one or more holes of from 5 to 30 cm is used. One of or both sides of the glass plate of the present invention may be decorated by printing or coating. By printing indicating the heating portion, a position on which a device such as a pot is to be placed will be distinct. Further, by coloring or patterning by printing or coating, the design property will improve.

A liquid crystal display panel may be bonded to the glass plate of the present invention. Information about the temperature and the like may be displayed on the top surface. In such a case, the transmittance of light at from 400 to 800 nm is preferably at least 50%.

The glass plate of the present invention may be cut out, and the cut portion may be provided with a display panel or an operation button. The operation button and the display of the heater can be concentrated in the top surface, and it is not necessary to attach the operation button and the display to the other part, whereby the design property will improve.

The glass plate of the present invention may be made to have a touch panel function. In such a case, operation of the heater can be conducted on the top surface, and it is not necessary to attach the operation button to the other part, whereby the handling efficiency will improve. In order that the glass plate has a touch panel function, the dielectric constant of the glass plate is preferably at least 5, more preferably at least 6, further preferably at least 7.

The edge part of the periphery of the glass plate of the present invention may be covered with a metal plate. The glass plate may be made to have higher mechanical strength by preventing scars by contact with objects.

The surface of the glass plate of the present invention may be coated for non-stick treatment. A commonly known non-stick coating agent may, for example, be fluororesin coating or hydrophilic coating.

Now, the heater of the present invention will be described.

The heater of the present invention is a heater comprising an infrared sensor, and the top surface on which an object to be heated is to be placed is composed of a glass plate. The heater of the present invention may, for example, be a cooking heater.

Of the glass plate constituting the top surface of the heater of the present invention, the thicknesses is from 1 to 8 mm, the infrared transmittance T₃₀₀₀ at a wavelength of 3,000 nm is at least 4%, preferably at least 10%, and the average thermal expansion coefficient α at from 50 to 350°C is from 15×10⁻⁷ to 35×10⁻⁷/°C. The glass plate constituting the top surface of the heater of the present invention is preferably the glass plate of the present invention.

That is, the glass composition of the glass plate as represented by mol% based on oxides preferably comprises from 50 to 85% of SiO₂, from 0.1 to 25% of Al₂O₃, from 0.1 to 20% of B₂O₃, from 0 to 20% in total of at least one member selected from MgO, CaO, SrO, BaO and ZnO, and from 0 to 20% in total of at least one member selected from Li₂O, Na₂O and K₂O.

Further, in order to increase the impact resistance, a chemically tempered glass plate is preferred.

### EXAMPLES

In the following, Ex. 1 to 10 are Examples for glass of the present invention, and Ex. 11 to 13 are Comparative Examples.

In Ex. 1 to 10, 12 and 13, raw materials of the respective components were prepared so as to achieve the desired composition, and melted in a platinum crucible at 1,550°C. As the raw materials, silica sand with a grain size of from 1 to 1,000 µm, aluminum oxide, sodium carbonate and the like were used. The glass melt was cast, formed into a plate and annealed.

Ex. 11 corresponds to commercially available crystallized glass (manufactured by Nippon Electric Glass Co., Ltd., tradename: Neoceram).

Table 1 shows the glass composition (unit: mol%), the crack occurrence load (unit: N), the infrared transmittance T₂₅₀₀ (unit: %) of the glass having a thickness of 4 mm at a wavelength of 2,500 nm, the infrared transmittance T₃₀₀₀ (unit: %) at a wavelength of 3,000 nm, the infrared transmittance T₃₂₀₀ (unit: %) at a wavelength of 3,200 nm, the average thermal expansion coefficient α (unit: ×10⁻⁷·°C⁻¹) at from 50°C to 350°C, the density (unit: g·cm⁻³), the glass transition temperature Tg (unit: °C), the strain point, the Young's modulus (unit: GPa) and the βOH value. The glass composition in Ex. 11 is estimated values from the literature (New Glass, Vol. 20, No. 3, p. 23, 2005).

### [Method of measuring βOH value]

With respect to a glass sample, the absorbance of light at a wavelength of from 2.75 to 2.95 µm is measured, and its maximum value βmax is divided by the thickness (mm) of the sample to determine the βOH value of the glass.

| mol% | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| SiO₂ | 68.0 | 68.7 | 68.3 | 68.0 | 69.0 | 70.0 | 70.0 | 69.8 | 70.0 | 70.0 | 72.1 | 83.0 | 66.1 |
| Al₂O₃ | 15.0 | 10.0 | 10.0 | 10.0 | 10.0 | 12.0 | 10.0 | 10.0 | 10.0 | 10.0 | 14.2 | 1.4 | 11.3 |
| B₂O₃ | 10.0 | 14.9 | 17.9 | 18.0 | 15.0 | 12.0 | 14.0 | 15.0 | 15.0 | 15.0 | 0.0 | 11.6 | 7.8 |
| MgO | 4.0 | 4.0 | 2.5 | 2.0 | 6.0 | 6.0 | 5.0 | 5.0 | 4.0 | 3.0 | 0.0 | 0.0 | 5.1 |
| CaO | 2.0 | 1.4 | 1.0 | 1.0 | 0.0 | 0.0 | 1.0 | 0.0 | 1.0 | 2.0 | 0.0 | 0.0 | 4.5 |
| SrO | 1.0 | 1.0 | 0.0 | 1.0 | 0.0 | 0.0 | 0.0 | 0.0 | 0.0 | 0.0 | 0.0 | 0.0 | 5.2 |
| BaO | 0.0 | 0.0 | 0.0 | 0.0 | 0.0 | 0.0 | 0.0 | 0.0 | 0.0 | 0.0 | 0.9 | 0.0 | 0.0 |
| Li₂O | 0.0 | 0.0 | 0.0 | 0.0 | 0.0 | 0.0 | 0.0 | 0.0 | 0.0 | 0.0 | 8.8 | 0.0 | 0.0 |
| TiO₂ | 0.0 | 0.0 | 0.0 | 0.0 | 0.0 | 0.0 | 0.0 | 0.0 | 0.0 | 0.0 | 1.6 | 0.0 | 0.0 |
| ZrO₂ | 0.0 | 0.0 | 0.0 | 0.0 | 0.0 | 0.0 | 0.0 | 0.0 | 0.0 | 0.0 | 1.1 | 0.0 | 0.0 |
| P₂O₅ | 0.0 | 0.0 | 0.0 | 0.0 | 0.0 | 0.0 | 0.0 | 0.0 | 0.0 | 0.0 | 0.5 | 0.0 | 0.0 |
| Na₂O | 0.0 | 0.0 | 0.0 | 0.0 | 0.0 | 0.0 | 0.0 | 0.0 | 0.0 | 0.0 | 0.4 | 4.0 | 0.0 |
| K₂O | 0.0 | 0.0 | 0.0 | 0.0 | 0.0 | 0.0 | 0.0 | 0.0 | 0.0 | 0.0 | 0.4 | 0.0 | 0.0 |
| SnO₂ | 0.0 | 0.3 | 0.3 | 0.0 | 0.0 | 0.0 | 0.0 | 0.3 | 0.0 | 0.0 | 0.0 | 0.0 | 0.0 |
| SiO₂+Al₂O₃+B₂O₃ | 93.0 | 93.6 | 96.2 | 96.0 | 94.0 | 94.0 | 94.0 | 94.7 | 95.0 | 95.0 | 86.3 | 96.0 | 85.2 |
| MgO+CaO+SrO+BaO+ZnO | 7.0 | 6.4 | 3.5 | 4.0 | 6.0 | 6.0 | 6.0 | 5.0 | 5.0 | 5.0 | 0.9 | 0.0 | 14.8 |
| Li₂O+Na₂O+K₂O | 0.0 | 0.0 | 0.0 | 0.0 | 0.0 | 0.0 | 0.0 | 0.0 | 0.0 | 0.0 | 9.6 | 4.0 | 0.0 |
| B₂O₃+MgO+CaO+SrO+BaO+ZnO | 17.0 | 21.3 | 21.4 | 22.0 | 21.0 | 18.0 | 20.0 | 20.0 | 20.0 | 20.0 | 0.9 | 11.6 | 22.6 |
| MgO/(MgO+CaO+SrO+BaO+ZnO) | 0.6 | 0.6 | 0.7 | 0.5 | 1.0 | 1.0 | 0.8 | 1.0 | 0.8 | 0.6 | 0.0 | - | 0.3 |
| Crack occurrence load | 19.6 | 19.6 | >20 | >20 | 19.6 | 19.6 | 19.6 | 19.6 | 19.6 | 19.6 | 1.96 | 4.9 | 4.9 |
| T₂₅₀₀ [%] | 80 | 80 | 73 | 72 | >78 | >78 | >78 | 73 | 72 | 74 | 83 | 75 | 77 |
| T₃₀₀₀ [%] | 16 | 38 | 44 | 37 | >10 | >10 | >10 | 35 | 39 | 39 | 2 | 3 | 7 |
| T₃₂₀₀ [%] | 20 | 33 | 44 | 39 | >20 | >20 | >20 | 39 | 42 | 43 | 6 | 10 | 16 |
| Average thermal expansion coefficient [10⁻⁷/°C] | 26.4 | 25.3 | 26.0 | 26.8 | (24.7) | (23.6) | (24.7) | 24.1 | 24.3 | 25.6 | -3 | 32.5 | 37.5 |
| Density [g/cm³] | 2.38 | 2.31 | (2.24) | (2.26) | (2.29) | (2.32) | (2.29) | 2.28 | 2.28 | 2.28 | 2.52 | 2.23 | 2.51 |
| Glass transition point [°C] | 745 | 714 | 711 | 694 | 719 | 740 | 716 | 715 | 712 | 705 | - | 560 | 720 |
| Strain point [°C] | (>685) | (>654) | (>651) | (>634) | (>659) | (>680) | (>656) | (>655) | (>652) | (>645) | | | |
| Young's modulus [GPa] | 79 | 69 | 61 | 76 | 68.4 | 73.9 | 69.0 | 68 | 68 | 67 | 92 | 64 | 77 |
| βOH [mm⁻¹] | 0.26 | 0.13 | 0.11 | 0.15 | 0.07 | <0.2 | 0.06 | 0.16 | 0.14 | 0.14 | 0.66 | 0.72 | 0.41 |

Values in brackets in Table 1 are estimated values.

When glass in each of Ex. 1 to 10 is formed into a plate having a thickness of from 1.5 to 5 mm, a glass plate suitable for a top surface of a heater, excellent in the infrared transmittance, the crack resistance and the heat resistance is obtained.

Glass in each of Ex. 11 and 12 is not suitable for a top surface of a heater employing an infrared sensor, since the infrared transmittance T₃₀₀₀ of the glass having a thickness of 4 mm at a wavelength of 3,000 nm is so low as less than 4%.

Crystallized glass in Ex. 11 has a low crack occurrence load and is easily broken when hit by a hard object.

Glass in Ex. 13 is not suitable for a top surface of a heater, since it has an average thermal expansion coefficient α at from 50°C to 350°C of so high as 37.5×10⁻7·°C⁻¹, and has a low resistance to a heat shock.

Glass in Ex. 2 is processed into a 5 cm square glass plate having a thickness of 4 mm, and the glass plate was heated in an electric furnace kept at high temperature for 30 minutes or longer. Then, the glass plate was taken out from the electric furnace and moved into water kept at low temperature within 5 minutes, and whether the glass plate was broken or not was observed. As a result, t₁=325°C, t₂=350°C and t₃=337.5°C, and a high resistance to a thermal shock was confirmed.

### INDUSTRIAL APPLICABILITY

According to the present invention, it is possible to obtain a glass plate, preferably a glass plate for a heater, which is hardly broken both by a thermal shock and by a mechanical shock, and which has a high infrared transmittance. Further, by using the glass plate, a heater excellent in convenience can be obtained.

The entire disclosure of Japanese Patent Application No. 2014-243758 filed on December 2, 2014 including specification, claims and summary is incorporated herein by reference in its entirety.

## Claims

1. A glass plate, which has a thickness of from 1 to 8 mm,
an infrared transmittance T₃₀₀₀ at a wavelength of 3,000 nm of at least 4 %,
an average thermal expansion coefficient α at from 50 to 350°C of from 15×10⁻⁷ to 35×10⁻⁷/°C, and
a composition comprising, as represented by mol% based on oxides:
| | |
|---|---|
| SiO₂: | 50 to 85%, |
| Al₂O₃: | 0.1 to 25%, |
| B₂O₃: | 0.1 to 20%, |
| MgO+CaO+SrO+BaO+ZnO: | 0 to 20%, and |
| Li₂O+Na₂O+K₂O: | 0 to 20%. |

2. The glass plate according to Claim 1, which has an infrared transmittance T₃₀₀₀ at a wavelength of 3,000 nm of at least 10%.

3. The glass plate according to Claim 1 or 2, wherein the crack occurrence load is higher than 1.96N.

4. The glass plate according to any one of Claims 1 to 3, which has a strain point of from 520 to 780°C.

5. The glass plate according to any one of Claims 1 to 4, which has a composition comprising, as represented by mol% based on oxides:
| | |
|---|---|
| SiO₂: | 60 to 70%, |
| Al₂O₃: | 4 to 25%, |
| B₂O₃: | 8 to 20%, |
| MgO: | 0 to 10%, |
| CaO: | 0 to 5%, |
| SrO: | 0 to 5%, |
| BaO: | 0 to 5%, |
| ZnO: | 0 to 5%, |
| MgO+CaO+SrO+BaO+ZnO: | 3 to 10%, |
| Li₂O: | 0 to 1%, |
| Na₂O: | 0 to 2%, |
| K₂O: | 0 to 2%, and |
| Li₂O+Na₂O+K₂O: | 0 to 10%, |
and has an average thermal expansion coefficient α at from 50 to 350°C of from 15×10⁻⁷ to 30×10⁻⁷/°C.

6. The glass plate according to Claim 5, which has a composition comprising, as represented by mol% based on oxides:
| | |
|---|---|
| Al₂O₃: | 5 to 25%, |
| MgO: | 1 to 8%, |
| ZnO: | 0 to 2%, |
| SiO₂+Al₂O₃+B₂O₃: | at least 80%, |
| MgO+CaO+SrO+BaO+ZnO: | 3 to 8%, and |
| Li₂O+Na₂O+K₂O: | 0 to 2% |

7. The glass plate according to Claim 5 or 6, which has a composition comprising, as represented by mol% based on oxides:
| | |
|---|---|
| B₂O₃+MgO+CaO+SrO+BaO+ZnO: | 11 to 22% |

8. The glass plate according to any one of Claims 5 to 7, wherein, as represented by mol% based on oxides, MgO/(MgO+CaO+SrO+BaO+ZnO) is from 0.6 to 1.

9. The glass plate according to any one of Claims 1 to 8, which has a compressive stress on at least a part of its surface.

10. The glass plate according to any one of Claims 1 to 9, which is a glass plate for a heater.

11. A heater comprising a top surface on which an object to be heated is to be placed, and an infrared sensor, the top surface being composed of a glass plate,
wherein the glass plate has a thickness of from 1 to 8 mm,
an infrared transmittance T₃₀₀₀ at a wavelength of 3,000 nm of at least 4%,
an average thermal expansion coefficient α at from 50 to 350°C of from 15×10⁻⁷ to 35×10⁻⁷/°C, and
a composition comprising, as represented by mol% based on oxides:
| | |
|---|---|
| SiO₂: | 50 to 85%, |
| Al₂O₃: | 0.1 to 25%, |
| B₂O₃: | 0.1 to 20%, |
| MgO+CaO+SrO+BaO+ZnO: | 0 to 20%, and |
| Li₂O+Na₂O+K₂O: | 0 to 20%. |

12. The heater according to Claim 11, wherein the glass plate has an infrared transmittance T₃₀₀₀ at a wavelength of 3,000 nm of at least 10%.

13. The heater according to Claim 11 or 12, wherein the glass plate is chemically tempered.
